# EUROPEAN PATENT APPLICATION

(11) **EP 4 383 447 A2**
(43) Date of publication of application: **12.06.2024**
(21) Application number: 23212767.0
(22) Date of filing: 28.11.2023
(51) Int. Cl.: H01M 50/636, H01M 10/0585, H01M 10/44, H01M 10/52, H01M 50/129, H01M 50/184, H01M 50/342, H01M 50/609, H01M 50/618, H01M 50/627, H01M 50/664, H01M 10/04, H01M 10/12, H01M 10/052

(54) **METHOD FOR PRODUCING BATTERY AND BATTERY**

(30) Priority: 05.12.2022 JP 2022194063
(71) Applicant: TOYOTA JIDOSHA KABUSHIKI KAISHA, Toyota-shi, Aichi-ken, 471-8571 (JP)
(72) Inventor: MORI, Hideto, Aichi-ken, 471-8571 (JP); HASEGAWA, Hajime, Aichi-ken, 471-8571 (JP)
(74) Representative: D Young & Co LLP

(57) **Abstract**

A main object of the present disclosure is to provide a method for producing a battery in which the degrade of sealability in a liquid injection frame is inhibited. The present disclosure achieves the object by providing the method including: a preparing step of preparing an electrode member that includes an electrode layered body including a plurality of electrode layered in a z axis direction, and a liquid injection frame made of a resin arranged in a side surface of the electrode layered body; a liquid injection step of injecting a liquid electrolyte into the electrode layered body in the electrode member via the liquid injection frame; a temporary sealing step of temporary sealing the liquid injection frame by arranging a gas pack to cover an entire outer periphery of the liquid injection frame when viewed from an x axis direction orthogonal to the z axis direction; a gas storing step of storing a gas generated due to charging or aging in a space inside the gas pack; a degassing step of degassing the gas by opening the gas pack after the gas storing step; and a sealing step of sealing the liquid injection frame with a sealing member.

## Description

### Technical Field

The present disclosure relates to a method for producing a battery and a battery.

### Background Art

In a method for producing a battery such as a lithium ion secondary battery, it has been known that a degassing step is performed to prevent the internal pressure of a battery from increasing due to gas generated in a charging step or an aging step. Patent Literature 1 discloses a method for producing a secondary battery wherein a charging step, a degassing step and an aging step are performed in a state a pair of wide width surfaces of a battery case are sandwiched from both sides and pressed in the direction of the sandwiching. Also, for example, Patent Literature 2 discloses that a pressure adjusting unit is arranged in a side surface of a battery to prevent the internal pressure of the battery from increasing.

### Citation List

### Patent Literatures

Patent Literature 1: Japanese Patent Application Laid-Open (JP-A) No. 2010-021104
Patent Literature 2: JP-A No. 2019-016459

### Summary of Disclosure

### Technical Problem

As described above, when gas is generated in a charging step or an aging step, internal pressure of a battery increases. When the internal pressure of a battery increases, gas tends to leak from a structurally weak part. For this reason, a degassing step may be performed to prevent the internal pressure of the battery from increasing.

In order to suppress the internal pressure of a battery, for example, an operation of sealing the battery, degassing after the internal pressure increases, sealing the battery again and degassing again after the internal pressure increases, that is, an operation of repeating a sealing step and a degassing step is effective. Meanwhile, when the sealing step and the degassing step are repeated, a liquid injection frame configured to inject a liquid electrolyte, or a sealing member may be deformed to degrade sealability of the liquid injection frame.

The present disclosure has been made in view of the above circumstances, and a main object of thereof is to provide a method for producing a battery in which the degrade of sealability in a liquid injection frame is inhibited.

### Solution to Problem

[1] A method for producing a battery, the method comprising:
   a preparing step of preparing an electrode member that includes an electrode layered body including a plurality of electrode layered in a z axis direction, and a liquid injection frame made of a resin arranged in a side surface of the electrode layered body;
   a liquid injection step of injecting a liquid electrolyte into the electrode layered body in the electrode member via the liquid injection frame;
   a temporary sealing step of temporary sealing the liquid injection frame by arranging a gas pack to cover an entire outer periphery of the liquid injection frame when viewed from an x axis direction orthogonal to the z axis direction, after the liquid injection step;
   a gas storing step of storing a gas generated due to charging or aging in a space inside the gas pack after the temporary sealing step;
   a degassing step of degassing the gas by opening the gas pack after the gas storing step; and
   a sealing step of sealing the liquid injection frame with a sealing member after the degassing step.
[2] The method for producing a battery according to [1], wherein the sealing member includes at least one of: (i) a part of the gas pack cut by a cutting jig and remained in a state connected to the liquid injection frame, (ii) a part of the gas pack cut by a cutting jig and cut out from the liquid injection frame, and (iii) a member other than the gas pack.
[3] The method for producing a battery according to [2], wherein the sealing member includes the (i).
[4] The method for producing a battery according to [2], wherein the sealing member includes the (ii).
[5] The method for producing a battery according to [2], wherein the sealing member includes the (iii).
[6] The method for producing a battery according to [3] or [4], wherein
   the gas pack includes a film member; and
   in the sealing step, a layered part, in which a plurality of the film member is layered in the x axis direction, is formed.
[7] The method for producing a battery according to any one of [1] to [6], wherein
   the gas pack includes a film member; and
   the film member includes layers in the order of a first resin layer, a metal layer, and a second resin layer in a thickness direction.
[8] The method for producing a battery according to any one of [1] to [7], wherein
   the liquid injection frame includes a resin; and
   the gas pack is welded to cover an entire outer periphery of the liquid injection frame in the temporary sealing step.
[9] The method for producing a battery according to any one of [1] to [8], wherein
   the liquid injection frame includes a resin; and
   the sealing member is welded in an open surface of the liquid injection frame.
[10] The method for producing a battery according to any one of [1] to [9], wherein
   a shape of the electrode layered body in a plan view is a square; and
   a length of one side of the square is 30 cm or more.
[11] The method for producing a battery according to any one of [1] to [10], wherein the liquid injection frame includes a plurality of a liquid injection port in the z axis direction.
[12] The method for producing a battery according to any one of [1] to [11], wherein the liquid injection frame includes a plurality of a liquid injection port in a y axis direction orthogonal to the z axis direction and the x axis direction.
[13] A battery comprising:
   an electrode layered body including a plurality of electrode layered in a z axis direction;
   a liquid injection frame made of a resin arranged in a side surface of the electrode layered body;
   a liquid electrolyte permeated to the electrode layered body; and
   a sealing member that seals the liquid injection frame; wherein
   when viewed from an x axis direction orthogonal to the z axis direction, a gas pack part is arranged to cover an entire outer periphery of the liquid injection frame;
   the gas pack part includes a first surface and a second surface facing to each other;
   the sealing member includes a first extending part extending from the first surface, and a second extending part extending from the second surface; and
   when viewed from the x axis direction, a layered part, in which the first extending part and the second extending part are layered, is arranged.
[14] The battery according to [13], wherein a residue of the liquid electrolyte is present between the first extending part and the second extending part in the layered part.

### Advantageous Effects of Disclosure

The method for producing a battery in the present disclosure exhibits an effect of inhibiting the degrade of sealability in a liquid injection frame.

### Brief Description of Drawings

FIG. 1 is a schematic cross-sectional view exemplifying the electrode member in the present disclosure.
FIG. 2 is a schematic perspective view exemplifying the liquid injection frame FIG. 1.
FIGS. 3A to 3E are schematic cross-sectional views exemplifying the temporary sealing step, the gas storing step, the degassing step and the sealing step in the present disclosure.
FIGS. 4A to 4C are schematic perspective views exemplifying the temporary sealing step, the gas storing step and the degassing step in the present disclosure.
FIGS. 5A to 5C are schematic perspective views exemplifying the sealing step in the present disclosure.
FIG. 6 is a schematic cross-sectional view (exploded view) exemplifying the method for preparing the electrode layered body in the present disclosure.
FIGS. 7A and 7B are schematic cross-sectional views exemplifying the method for preparing the electrode layered body in the present disclosure.
FIGS. 8A and 8B are schematic cross-sectional views exemplifying the method for preparing the gas pack in the present disclosure.
FIGS. 9A to 9D are schematic cross-sectional views exemplifying the degassing step and the sealing step in the present disclosure.
FIGS. 10A to 10D are schematic cross-sectional views exemplifying the degassing step and the sealing step in the present disclosure.
FIGS. 11A to 11D are schematic cross-sectional views exemplifying the degassing step and the sealing step in the present disclosure.
FIGS. 12A to 12E are schematic cross-sectional views exemplifying the degassing step and the sealing step in the present disclosure.
FIG. 13 is a schematic cross-sectional view exemplifying the battery in the present disclosure.

### Description of Embodiments

The embodiments in the present disclosure will be hereinafter explained in details with reference to drawings. Each drawing described as below is a schematic view, and the size and the shape of each portion are appropriately exaggerated in order to be understood easily. Furthermore, in the present description, upon expressing an embodiment of arranging one member with respect to the other member, when it is expressed simply "on" or "below", both of when the other member is directly arranged on or below the one member so as to contact with each other, and when the other member is arranged above or below the one member interposing an additional member, can be included unless otherwise described.

### A. Method for producing battery

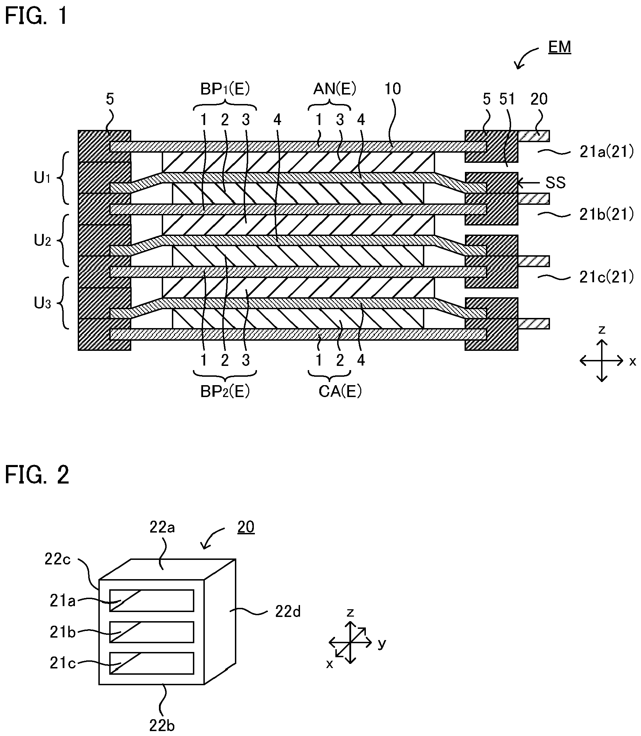

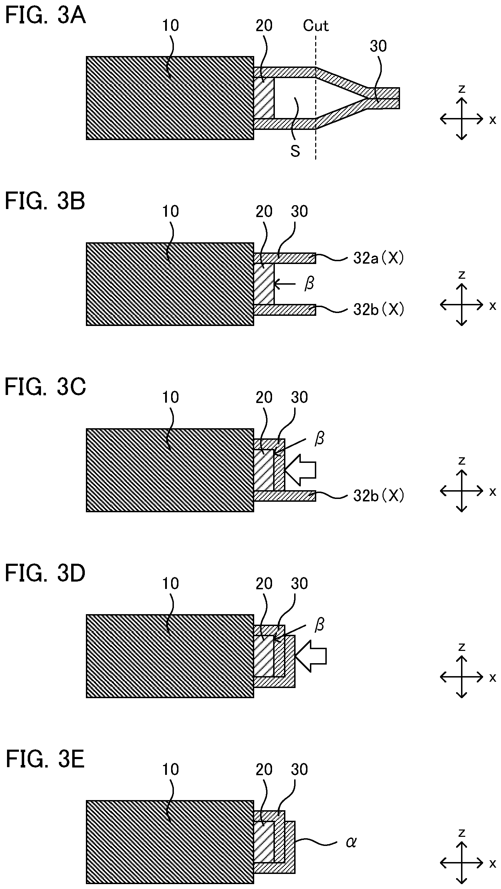

An example of the method for producing a battery in the present disclosure will be explained with reference to FIG. 1 to FIG. 3E. FIG. 1 is a schematic cross-sectional view exemplifying the electrode member in the present disclosure, FIG. 2 is a schematic perspective view exemplifying the liquid injection frame in FIG. 1, and FIGS. 3A to 3E are schematic cross-sectional views exemplifying the temporary sealing step, the gas storing step and the degassing step and the sealing step in the present disclosure.

FIG. 1 is a schematic cross-sectional view exemplifying the electrode member in the present disclosure. As shown in FIG. 1, electrode member EM that includes electrode layered body 10 including a plurality of electrode E layered in a z axis direction, and liquid injection frame 20 made of a resin arranged in a side surface SS of the electrode layered body 10, is prepared (a preparing step). Also, the liquid injection frame 20 shown in FIG. 2 includes three liquid injection ports 21a, 21b and 21c arranged in the z axis direction. As shown in FIG. 1, the liquid injection ports 21a, 21b and 21c are respectively arranged to correspond to power generating units U₁, U₂ and U₃.

Next, a liquid electrolyte is injected into the electrode layered body 10 in the electrode member EM via the liquid injection frame 20 (a liquid injection step). As shown in FIG. 1, in side surface SS of the electrode layered body 10, penetration hole 51 leading to inside the electrode layered body 10 is formed. A nozzle (not illustrated) is arranged at the liquid injection port 21 in the liquid injection frame 20, and a liquid electrolyte is injected into the electrode layered body 10 via the penetration hole 51.

Next, as shown in FIG. 3A, the liquid injection frame 20 is temporary sealed by arranging gas pack 30 to cover an entire outer periphery of the liquid injection frame 20 when viewed from an x axis direction (a temporary sealing step). For example, the liquid injection frame 20 shown in FIG. 2 includes, as surfaces configuring the outer periphery in the x axis direction, surface 22a, surface 22b, surface 22c and surface 22d. The gas pack 30 is welded to these surfaces. Thereby, the liquid injection frame 20 is temporary sealed with the gas pack 30. Then, charging or aging is performed. A gas generated due to charging or aging is stored in space S inside the gas pack 30 (a gas storing step). Next, as shown in FIG. 3B, the gas pack 30 is cut to degas (a degassing step). Next, as shown in FIGS. 3C to 3E, the liquid injection frame 20 is sealed with sealing member X (a part of the gas pack 30 cut by a cutting jig and remained in a state connected to the liquid injection frame 20).

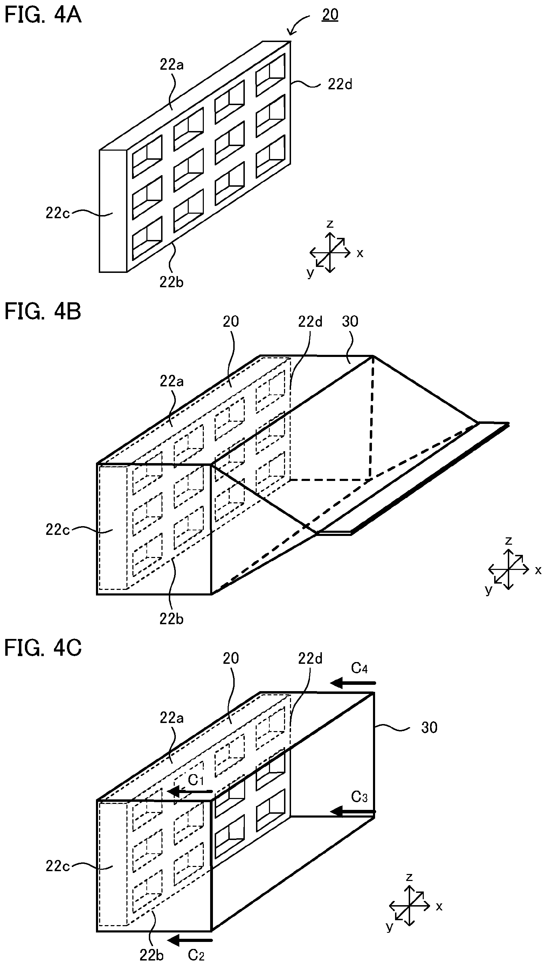

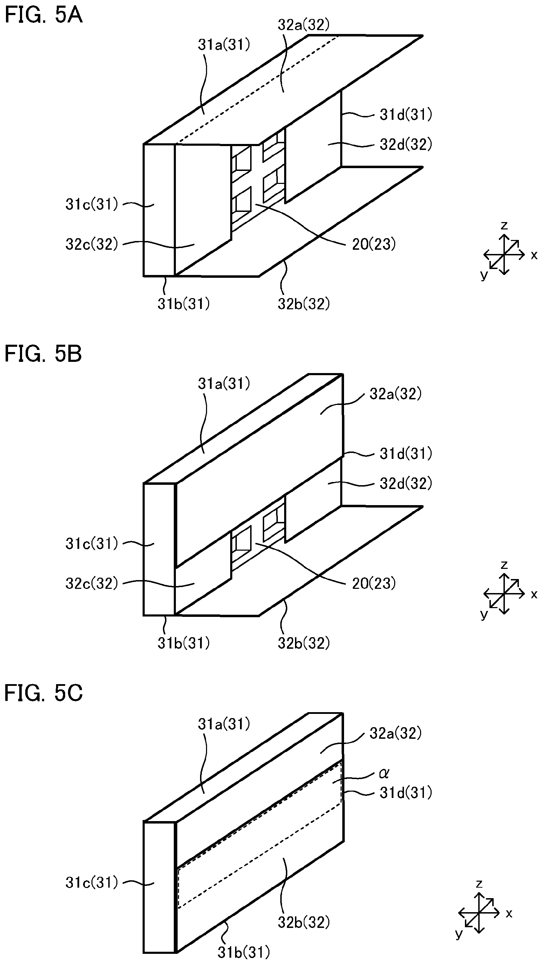

Another example of the method for producing a battery in the present disclosure will be explained with reference to FIG. 4A to FIG. 5C. FIGS. 4A to 4C are schematic perspective views exemplifying the temporary sealing step, the gas storing step and the degassing step in the present disclosure. FIGS. 5A to 5C are schematic perspective views exemplifying the sealing step in the present disclosure.

The liquid injection frame 20 shown in FIG. 4A includes a plurality of liquid injection port 21 respectively in the y axis direction and the z axis direction, and the total number of the liquid injection port 21 is 12. The liquid injection frame 20 shown in FIG. 4A includes, as surfaces configuring the outer periphery in the x axis direction, surface 22a, surface 22b, surface 22c and surface 22d. Next, as shown in FIG. 4B, gas pack 30 is welded to surfaces 22a to 22d. Thereby, the liquid injection frame 20 is temporary sealed with the gas pack 30 (a temporary sealing step). Then, charging or aging is performed. A gas generated due to charging or aging is stored in a space inside the gas pack 30 (a gas storing step). Next, as shown in FIG. 4C, the gas pack 30 is cut in y-z plane to degas (a degassing step). Further, when viewed from the x axis direction, in four corners of the gas pack 30, notches C₁ to C₄ are made in the x axis direction.

As shown in FIG. 5A, a part of the gas pack covering the entire outer periphery of the liquid injection frame 20 is indicated as gas pack part 31. The gas pack part 31 includes first surface 31a, second surface 31b, third surface 31c and fourth surface 31d. The first surface 31a, the second surface 31b, the third surface 31c and the fourth surface 31d respectively cover the surface 22a, the surface 22b, the surface 22c and the surface 22d in FIG. 4A. Also, the first surface 31a and the second surface 31b face to each other in the z axis direction, and the third surface 31c and the fourth surface 31d face to each other in the y axis direction.

In FIG. 5A, extending part 32 extending from the gas pack part 31 is used as a sealing member. The extending part 32 corresponds to a part of the gas pack 30 cut by a cutting jig and remained in a state connected to the liquid injection frame 20. The extending part 32 includes first extending part 32a extending from the first surface 31a, second extending part 32b extending from the second surface 31b, third extending part 32c extending from the third surface 31c, and fourth extending part 32d extending from the fourth surface 31d.

As shown in FIG. 5A, the third extending part 32c and the fourth extending part 32d are welded on open surface 23 (surface of which normal direction is the x axis direction) in the liquid injection frame 20. Next, as shown in FIG. 5B, the first extending part 32a is welded to the open surface 23 in the liquid injection frame 20 interposing the third extending part 32c and the fourth extending part 32d. Next, as shown in FIG. 5C, the second extending part 32b is welded to the open surface 23 in the liquid injection frame 20 interposing the first extending part 32a, the third extending part 32c and the fourth extending part 32d. Thereby, the liquid injection frame 20 is sealed.

According to the present disclosure, usage of the gas pack enables the inhibition of the degrade of sealability in a liquid injection frame. As described above, when gas is generated in a charging step or an aging step, internal pressure of a battery increases. When the internal pressure of a battery increases, gas tends to leak from a structurally weak part. For this reason, a degassing step may be performed to prevent the internal pressure of the battery from increasing.

In order to suppress the internal pressure of a battery, for example, an operation of sealing the battery, degassing after the internal pressure increases, sealing the battery again and degassing again after the internal pressure increases, that is, an operation of repeating a sealing step and a degassing step is effective. In specific, repetition of the sealing step and the degassing step facilitates controlling of the internal pressure of the battery lower than the pressure resistance strength of the battery. Particularly when a battery is in largescaled, the operation of repeating the sealing step and the degassing step is effective since gas generation amount tends to be much. On the other hand, when the sealing step and the degassing step are repeated, the liquid injection frame configured to inject the liquid electrolyte, or the sealing member (film member) may be deformed to degrade the sealability in the liquid injection frame. In specific, when an operation of thermal welding of the sealing member (film member) to the liquid injection frame is repeated, at least one of the liquid injection frame and the sealing member is easily deformed, which may lead to the degrade of the sealability in the liquid injection frame.

In contrast, in the present disclosure, the gas pack is used to temporary seal the liquid injection frame. Since the gas pack includes an internal space, the increase of the internal pressure of a battery may be lightened compared to when, for example, temporary sealing is performed using a film member. As a result, repetition of the sealing step and the degassing step may not be necessary or the time of performing the steps may be reduced. As a result, deformation of at least one of the liquid injection frame and the sealing member does not easily occur, and the degrade of the sealability in the liquid injection frame can be inhibited. Also, along with the increase in the internal pressure of the battery, gas is emitted with a great force from a penetration hole configured to supply the liquid electrolyte, and the liquid electrolyte is also emitted from the penetration hole along with the flow of the gas, which may lead to spreading of the liquid electrolyte outside the battery. In contrast, in the present disclosure, the liquid injection frame is temporary sealed with the gas pack, and thus the gas and the liquid electrolyte can be stored in the space inside the gas pack. As a result, the spreading of the liquid electrolyte outside the battery can be inhibited. Further, as described later, a part of the gas pack cut by a cutting jig and remained in a state connected to the liquid injection frame is used as the sealing member, and thus cost reduction can be achieved.

### 1. Preparing step

The preparing step in the present disclosure is a step of preparing an electrode member that includes an electrode layered body including a plurality of electrode layered in a z axis direction, and a liquid injection frame made of a resin arranged in a side surface of the electrode layered body.

### (1) Electrode layered body

The electrode layered body in the present disclosure includes a plurality of electrode layered in a z axis direction. The electrode includes a current collector, and an electrode layer (cathode layer or anode layer) arranged on at least one surface of the current collector.

As shown in FIG. 1, the electrode layered body 10 includes a plurality of electrode E layered in a z axis direction. The electrode layered body 10 shown in FIG. 1 includes, as the electrode E, bipolar electrode BP₁, bipolar electrode BP₂, cathode side end electrode CA and anode side end electrode AN. The bipolar electrode BP₁ and the bipolar electrode BP₂ respectively include cathode layer 2 arranged on one surface of current collector 1, and anode layer 3 arranged on the other surface of the current collector 1. The cathode side end electrode CA includes the current collector 1 and the cathode layer 2 arranged on one surface of the current collector 1. The anode side end electrode AN includes the current collector 1 and the anode layer 3 arranged on one surface of the current collector 1.

As shown in FIG. 1, the electrode layered body 10 may include bipolar electrode BP including, as the electrode E, current collector 1, cathode layer 2 arranged on one surface of the current collector 1, and anode layer 3 arranged on the other surface of the current collector 1. The electrode layered body in the present disclosure may include just one of the bipolar electrode BP, and may include two or more thereof. Meanwhile, the electrode layered body in the present disclosure is not particularly limited if it is the one including a plurality of the electrode E layered in the z axis direction, and may not include the bipolar electrode.

As shown in FIG. 1, the electrode layered body 10 is provided with power generating unit U (U₁ to U₃). The power generating unit U includes cathode layer 2, anode layer 3, and separator 4 arranged between the cathode layer 2 and the anode layer 3. To the cathode layer 2, the anode layer 3 and the separator 4, the liquid electrolyte is supplied via penetration hole 51. As a result, the cathode layer 2, the anode layer 3 and the separator 4 are respectively impregnated with the liquid electrolyte. Also, the electrode layered body in the present disclosure may include one of the power generating unit, and may include two or more thereof.

As shown in FIG. 1, the electrode layered body 10 may include a plurality of the power generating unit U (U₁, U₂, U₃) layered in the z axis direction. As shown in FIG. 1, the plurality of the power generating unit U (U₁, U₂, U₃) may be connected to each other in series. Also, although not illustrated in particular, the plurality of the power generating unit may be connected to each other in parallel. The plurality of the power generating unit is respectively independent so that the liquid electrolyte does not flow among each other. In FIG. 1, the plurality of the power generating unit U (U₁, U₂, U₃) is respectively independent so that the liquid electrolyte does not flow among each other. For example, the power generating unit U₁ and the power generating unit U₂ are divided by the current collector 1 and the sealing member 5, and thus respectively independent.

One power generating unit may be configured by two bipolar electrodes. In FIG. 1, the electrode layered body 10 includes the bipolar electrode BP₁ and the bipolar electrode BP₂ in the z axis direction. The separator 4 is arranged between the bipolar electrode BP₁ and the bipolar electrode BP₂ adjacent to each other. The power generating unit U₂ is configured by cathode layer 2 in the bipolar electrode BP₂, anode layer 3 in the bipolar electrode BP₁, and the separator 4 arranged between them. On the other hand, the power generating unit U₁ is configured by cathode layer 2 in the bipolar electrode BP₁, anode layer 3 in the anode side end electrode AN, and the separator 4 arranged between them. Also, the power generating unit U₃ is configured by anode layer 3 in the bipolar electrode BP₂, cathode layer 2 in the cathode side end electrode CA, and the separator 4 arranged between them.

As shown in FIG. 1, when viewed from the z axis direction, frame shaped sealing member 5 is preferably arranged along the outer periphery of the current collector 1. The sealing member is preferably a resin member. Examples of the resin configuring the resin member may include a thermoplastic resin. Examples of the thermoplastic resin may include olefin-based resins such as polyethylene and polypropylene. Also, as shown in FIG. 1, the sealing member 5 preferably includes penetration hole 51 for supplying the liquid electrolyte into the electrode layered body 10. As shown in FIG. 1, the penetration hole 51 preferably extends in the x axis direction.

There are no particular limitations on the shape of the electrode layered body in a plan view (shape when viewed from the z axis direction), and examples thereof may include a square shape such as a foursquare shape and a rectangular shape. The length of one side of the shape of the electrode layered body in a plan view is, for example, 30 cm or more, may be 50 cm or more, and may be 100 cm or more. Meanwhile, the length of the one side is, for example, 200 cm or less.

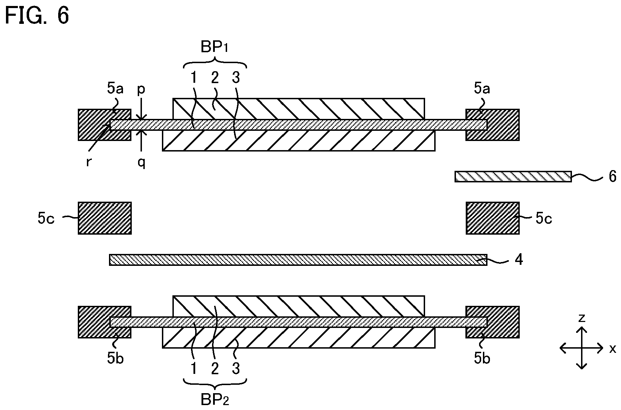

There are no particular limitations on the method for preparing the electrode layered body. FIG. 6 is a schematic cross-sectional view (exploded view) exemplifying the method for preparing the electrode layered body in the present disclosure. As shown in FIG. 6, bipolar electrode BP₁ and bipolar electrode BP₂ are prepared. The bipolar electrode BP₁ includes cathode layer 2 arranged on one surface of current collector 1, and anode layer 3 arranged on the other surface of the current collector 1.

Further, the bipolar electrode BP₁ includes frame member 5a for forming a sealing member, arranged along the outer periphery of the current collector 1. When viewed from the z axis direction, the frame member 5a is usually arranged along the entire outer periphery of the current collector 1. For example, when the shape of the outer periphery of the current collector 1 is square, the frame member 5a is arranged along the entire outer periphery of that square. Also, as shown in FIG. 6, the frame member 5a preferably covers a part of one main surface p of the current collector 1, a part of the other main surface q of the current collector 1, and a whole of side surface r configuring the outer periphery of the current collector 1.

As shown in FIG. 6, the bipolar electrode BP₂ includes cathode layer 2 arranged on one surface of the current collector 1, and anode layer 3 arranged on the other surface of the current collector 1. Further, the bipolar electrode BP₂ includes frame member 5b for forming a sealing member, arranged along the outer periphery of the current collector 1. Details of the bipolar electrode BP₂ are the same as the details of the bipolar electrode BP₁ described above.

As shown in FIG. 6, the anode layer 3 in the bipolar electrode BP₁ and the cathode layer 2 in the bipolar electrode BP₂ are faced to each other interposing separator 4. On this occasion, at least a part of the outer periphery of the separator 4 is arranged between the frame member 5a and the frame member 5b. Also, as shown in FIG. 6, nest 6 and frame member (spacer) 5c are arranged between the frame member 5a in the bipolar electrode BP₁ and the frame member 5b in the bipolar electrode BP₂. Next, although not illustrated in particular, similarly to FIG. 1, cathode side end electrode CA and anode side end electrode AN are layered on the bipolar electrode BP₁ and the bipolar electrode BP₂ respectively interposing the separator 4. After that, a plurality of the frame members layered are welded to form a sealing member. In this manner, the electrode layered body in which a nest is inserted is obtained.

### (2) Liquid injection frame

The liquid injection frame in the present disclosure is arranged in a side surface of the electrode layered body. The side surface of the electrode layered body refers to a surface extending in the z axis direction in the electrode layered body. Also, the side surface of the electrode layered body is usually a surface connecting a top surface (one main surface) of the electrode layered body and a bottom surface (the other main surface) of the electrode layered body facing to each other in the z axis direction.

The liquid injection frame is made of a resin. Examples of the resin configuring the liquid injection frame may include a thermoplastic resin. Examples of the thermoplastic resin may include olefin-based resins such as polyethylene and polypropylene.

Also, as shown in FIG. 2, the liquid injection frame 20 includes liquid injection port 21. The liquid injection port 21 is a member capable of supplying the liquid electrolyte in the x axis direction orthogonal to the z axis direction. Also, as shown in FIG. 2, the liquid injection frame 20 may include a plurality of the liquid injection port 21 (21a, 21b, 21c) arranged in the z axis direction. On the other hand, although not illustrated in particular, the liquid injection frame may include just one of the liquid injection port. Also, as shown in FIG. 4A, the liquid injection frame 20 may include a plurality of the liquid injection port 21 arranged in a y axis direction. Similarly, the liquid injection frame 20 in FIG. 4A may include a plurality of the liquid injection port 21 arranged in the z axis direction.

There are no particular limitations on the shape of the outer periphery of the liquid injection port when viewed from the x axis direction, and examples thereof may include a square shape such as a rectangular shape and a foursquare shape. Also, there are no particular limitations on the shape of the outer periphery of the liquid injection frame when viewed from the x axis direction, and examples thereof may include a square shape such as a rectangular shape and a foursquare shape. Also, as shown in FIG. 2, when viewed from the x axis direction, the liquid injection frame 20 may include, as surfaces configuring the outer periphery, surface 22a, surface 22b, surface 22c and surface 22d. The later described gas pack is welded to these surfaces. In FIG. 2, the surface 22a and the surface 22b are arranged so as to face to each other. Similarly, in FIG. 2, the surface 22c and the surface 22d are arranged so as to face to each other.

### (3) Electrode member

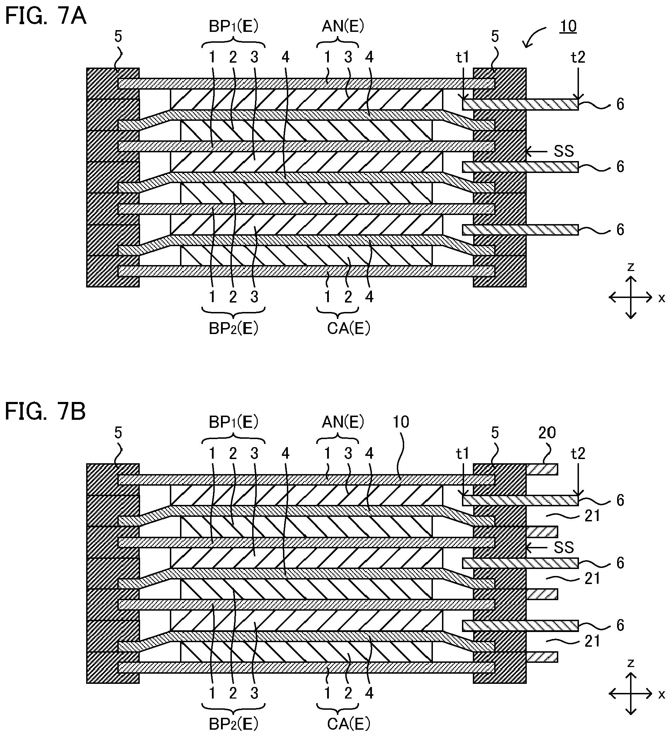

The electrode member in the present disclosure includes an electrode layered body including a plurality of electrode layered in a z axis direction, and a liquid injection frame made of a resin arranged in a side surface of the electrode layered body. There are no particular limitations on the method for preparing the electrode member. FIGS. 7A and 7B are schematic cross-sectional views exemplifying the method for preparing the electrode member in the present disclosure. As shown in FIG. 7A, first, electrode layered body 10 in which nest 6 is inserted is prepared. In the electrode layered body 10, one end t1 of the nest 6 is positioned inside the electrode layered body 10, and the other end t2 of the nest 6 is positioned outside the electrode layered body 10.

Next, as shown in FIG. 7B, liquid injection frame 20 made of a resin is arranged in side surface SS of the electrode layered body 10. The liquid injection port 21 in the liquid injection frame 20 is arranged so as not to interfere with the end t2 of the nest 6. For example, the liquid injection frame 20 may be fixed in the side surface SS of the electrode layered body 10 by welding the liquid injection frame 20 in the side surface SS of the electrode layered body 10. Also, the liquid injection frame 20 may be arranged in the side surface SS of the electrode layered body 10 by a resin molding such as an injection molding.

### 2. Liquid injection step

The liquid injection step in the present disclosure is a step of injecting a liquid electrolyte into the electrode layered body in the electrode member via the liquid injection frame. There are no particular limitations on the method for injecting the liquid electrolyte, and examples thereof may include a conventionally known method using an injection device. The liquid electrolyte is introduced to the liquid injection port (such as liquid injection port 21 in FIG. 1), and supplied into the electrode layered body via a penetration hole (such as penetration hole 51 in FIG. 1).

### 3. Temporary sealing step

The temporary sealing step in the present disclosure is a step of temporary sealing the liquid injection frame by arranging a gas pack to cover an entire outer periphery of the liquid injection frame when viewed from an x axis direction orthogonal to the z axis direction, after the liquid injection step.

The gas pack preferably includes a film member. Also, the film member preferably includes a metal layer. The film member including the metal layer improves gas barrier properties. As described later, when a part of the gas pack is used as the sealing member, the film member preferably includes the metal layer. Examples of the materials of the metal layer may include aluminum, an aluminum alloy, and stainless steel. The thickness of the metal layer is, for example, 30 um or more and 60 um or less. On the other hand, when a part of the gas pack is not used as the sealing member, the film member may not include the metal layer since high gas barrier properties are not required.

The film member preferably includes a resin layer. The film member including the resin layer improves the adhesion with the liquid injection frame made of a resin. On the occasion of arranging the gas pack to cover the entire outer periphery of the liquid injection frame, the resin layer in the gas pack and the liquid injection frame are preferably welded. Examples of the materials of the resin layer may include a thermoplastic resin. Examples of the thermoplastic resin may include olefin-based resins such as polyethylene and polypropylene; and ester-based resins such as polyethylene terephthalate. The film member may include just one layer or two layers or more of the resin layer, and may include the resin layer and the metal layer.

The film member preferably includes layers in the order of a first resin layer, a metal layer, and a second resin layer in a thickness direction. By arranging the first resin layer, the adhesion to the liquid injection frame made of a resin improves, and by arranging the metal layer, gas barrier properties improve, and by arranging the second resin layer, insulation improves. The first resin layer preferably contains an olefin-based resin such as polyethylene and polypropylene. The thickness of the first resin layer is, for example, 40 um or more and 100 um or less. Also, the material and the thickness of the metal layer are as described above. Also, the second resin layer preferably contains an ester-based resin such as polyethylene terephthalate. The thickness of the second resin layer is, for example, 40 um or more and 100 um or less.

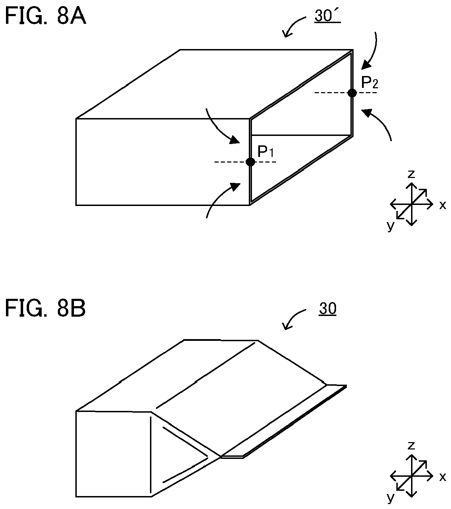

The gas pack is preferably configured by the film member. For example, as shown in FIG. 8A, by folding the film member, hollow member 30' of which outer periphery of the cross-section in the x-axis direction is square, is formed. Next, in one end surface of the hollow member 30' in the x axis direction, two central points in the z axis direction are respectively indicated as P₁ and P₂. The central point P₁ and the central point P₂ are respectively pushed into the center side of the end surface, and heating and pressing are performed in that state from the z axis direction. Thereby, gas pack 30 shown in FIG. 8B is obtained.

For example, as shown in FIGS. 3A to 3E, the gas pack 30 includes internal space S capable of storing gas generated due to charging or aging. The internal space S is included, and thus increase in the internal pressure of the battery due to the gas is inhibited. There are no particular limitations on the maximum volume of the internal space S, and to one liquid injection port, for example, it is 200 cm³ or more and 1000 cm³ or less, and may be 500 cm³ or more and 900 cm³ or less. Also, the volume (apparent volume) of the internal space of the gas pack when the liquid injection frame is temporary sealed may be smaller than the maximum volume of the internal space. For example, when the gas pack of which liquid injection frame is temporary sealed is folded or deflected, the volume (apparent volume) of the internal space of the gas pack of which liquid injection frame is temporary sealed is smaller than the maximum volume of the internal space. In this case, the volume (apparent volume) of the internal space is increased by the gas generated due to charging or aging.

As shown in FIG. 4B, when viewed from the x axis direction, gas pack 30 is arranged to cover an entire outer periphery of the liquid injection frame 20. The liquid injection frame 20 includes, as surfaces configuring the outer periphery in the x axis direction, surface 22a, surface 22b, surface 22c and surface 22d. To these surfaces, the gas pack 30 is arranged and the liquid injection frame 20 is temporary sealed. The surface 22a and the surface 22b are faced to each other in the z axis direction, and the surface 22c and the surface 22d are faced to each other in the y axis direction.

The gas pack in the present disclosure usually does not correspond to an outer package covering the electrode member overall. The reason therefor is because the liquid electrolyte permeated into the electrode layered body is basically sealed with the sealing member (such as sealing member 5 in FIG. 1) and the current collector (such as current collector 1 in FIG. 1). Also, when an outer package covering the electrode member overall is used, when the scale of the electrode member becomes large, it is necessary to also enlarge the scale of the outer package. In contrast, when the liquid electrolyte permeated into the electrode layered body is sealed with the sealing member (such as sealing member 5 in FIG. 1) and the current collector (such as current collector 1 in FIG. 1), it is not necessary to use the outer package covering the electrode member overall, and thus there is an advantage that the scale of the electrode member may be easily enlarged.

### 4. Gas storing step

The gas storing step in the present disclosure is a step of storing a gas generated due to charging or aging in a space inside the gas pack after the temporary sealing step. When charging or aging is performed to the electrode member (battery) after the temporary sealing step, gas is generated by, for example, decomposition of the liquid electrolyte, and the internal pressure of the electrode member (battery) increases. Along with the increase of the internal pressure, the gas is voluntary spread to the liquid injection port (such as liquid injection port 21 in FIG. 1) side via the penetration hole (such as penetration hole 51 in FIG. 1), and stored in the space inside the gas pack.

There are no particular limitations on the conditions of the charging or the aging. For the conditions of the charging, for example, the battery may be charged until the SOC (State of Charge) becomes 50% or more, may be charged until the SOC becomes 70% or more, and may be charged until the SOC becomes 90% or more. Meanwhile, the aging temperature is, for example, 35°C or more and 85°C or less, and maybe 40°C or more and 80°C or less. Also, the aging time is, for example, 10 hours or more and 20 hours or more.

### 5. Degassing step

The degassing step in the present disclosure is a step of degassing the gas by opening the gas pack after the gas storing step. Examples of the method for opening the gas pack may include a method of cutting the gas pack and a method of making a hole in the gas pack.

As shown in FIG. 3A, the gas stored in the space inside the gas pack 30 may be degassed by cutting the gas pack 30. On the other hand, although not illustrated in particular, the gas stored in the space inside the gas pack may be degassed by making a hole in the gas pack, and then, the gas pack may be appropriately cut in accordance with the treatment performed in the later described sealing step.

### 6. Sealing step

The sealing step in the present disclosure is a step of sealing the liquid injection frame with a sealing member after the degassing step. The sealing step is preferably performed in a reduced pressure atmosphere.

The sealing member preferably includes at least one of: (i) a part of the gas pack cut by a cutting jig and remained in a state connected to the liquid injection frame, (ii) a part of the gas pack cut by a cutting jig and cut out from the liquid injection frame, and (iii) a member other than the gas pack.

First, the case of the (i) will be explained. In the case of the (i), the liquid injection frame is sealed with a sealing member including a part of the gas pack cut by a cutting jig and remained in a state connected to the liquid injection frame. For example, as shown in FIG. 3A, when the gas pack 30 is cut by a cutting jig (not illustrated), as shown in FIG. 3B, a part of the gas pack 30 remains in a state connected to the liquid injection frame 20. The liquid injection frame 20 is sealed by, for example, as shown in FIGS. 3C to 3D, using the remained gas pack 30 as sealing member X. In specific, as shown in FIG. 3C, the first extending part 32a is thermally welded on open surface β of the liquid injection frame 20 using a heat bar, for example. Next, as shown in FIG. 3D, the second extending part 32b is thermally welded on the first extending part 32a using a heat bar, for example. Thereby, as shown in FIG. 3E, layered part α in which a plurality of film members (first extending part 32a and second extending part 32b) are layered in the x axis direction, is formed. Also, a residue of the liquid electrolyte may be present between the first extending part 32a and the second extending part 32b. In the above described gas storing step, not only the gas but also the liquid electrolyte is stored in the space inside the gas pack. For this reason, the residue of the liquid electrolyte may be present between the first extending part 32a and the second extending part 32b.

Also, in FIGS. 5A to 5C, similarly to FIGS.3A to 3E, the extending part 32 extending from the gas pack part 31 is used as a sealing member. The extending part 32 includes first extending part 32a extending from the first surface 31a, second extending part 32b extending from the second surface 31b, third extending part 32c extending from the third surface 31c, and fourth extending part 32d extending from the fourth surface 31d. In the present disclosure, it is preferable that a layered part α, in which at least two or more of the first extending part 32a, the second extending part 32b, the third extending part 32c and the fourth extending part 32d are layered in the x axis direction, is formed.

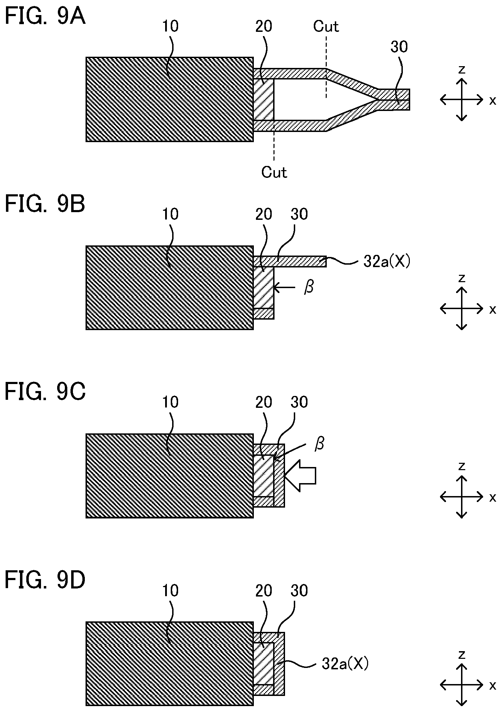

In the present disclosure, the liquid injection frame may be sealed without forming the above described layered part. For example, as shown in FIGS. 9A and 9B, the gas pack 30 is cut by a cutting jig (not illustrated) to form just first extending part 32a as the extending part 32. Next, as shown in FIG. 9C, the first extending part 32a is welded on open surface β of the liquid injection frame 20. Thereby, as shown in FIG. 9D, the liquid injection frame 20 is sealed without forming the above described layered part. In this case, the above described third extending part and fourth extending part may also be cut by the cutting jig.

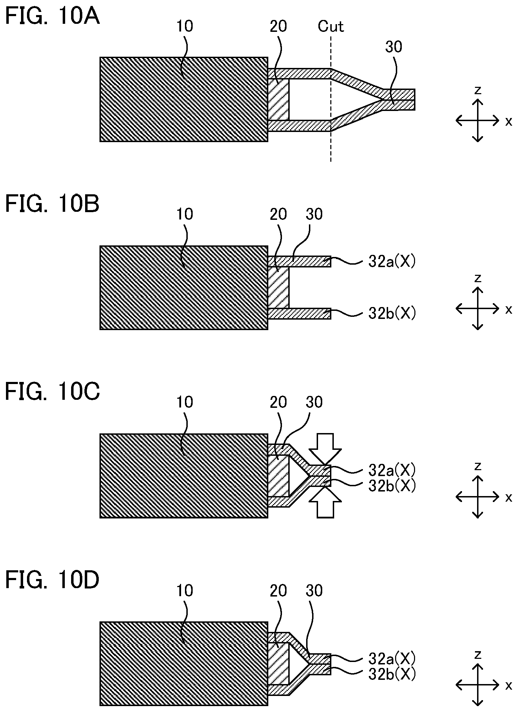

In the present disclosure, the liquid injection frame may be sealed without welding the extending part onto the open surface of the liquid injection frame. For example, as shown in FIGS. 10A and 10B, the gas pack 30 is cut by a cutting jig (not illustrated) to form first extending part 32a and second extending part 32b. Next, as shown in FIG. 10C, the first extending part 32a and the second extending part 32b are welded so as to face to each other in the z axis direction. Thereby, as shown in FIG. 10D, the liquid injection frame 20 is sealed without welding the extending part 32 onto the open surface β of the liquid injection frame 20. Incidentally, in FIG. 10C, similarly to the above described FIGS. 8A and 8B, the third extending part and the fourth extending part are preferably pushed into the center side of the end surface.

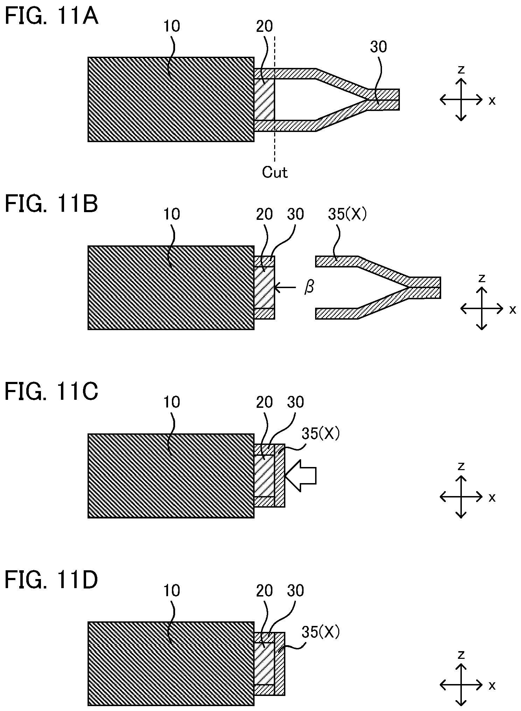

Next, the case of (ii) will be explained. In the case of (ii), the liquid injection frame is sealed with a sealing member including a part of the gas pack cut by a cutting jig and cut out from the liquid injection frame. For example, as shown in FIG. 11A, when the gas pack 30 is cut by a cutting jig (not illustrated), as shown in FIG. 11B, a part of the gas pack 30 is cut out from the liquid injection frame 20. The liquid injection frame 20 is sealed by, for example, as shown in FIGS. 11C and 11D, using the cut-out gas pack 35 as a sealing member X. In specific, as shown in FIG. 11C, the gas pack 35 is welded onto the open surface β of the liquid injection frame 20. Thereby, as shown in FIG. 11D, the liquid injection frame 20 is sealed with the gas pack 35.

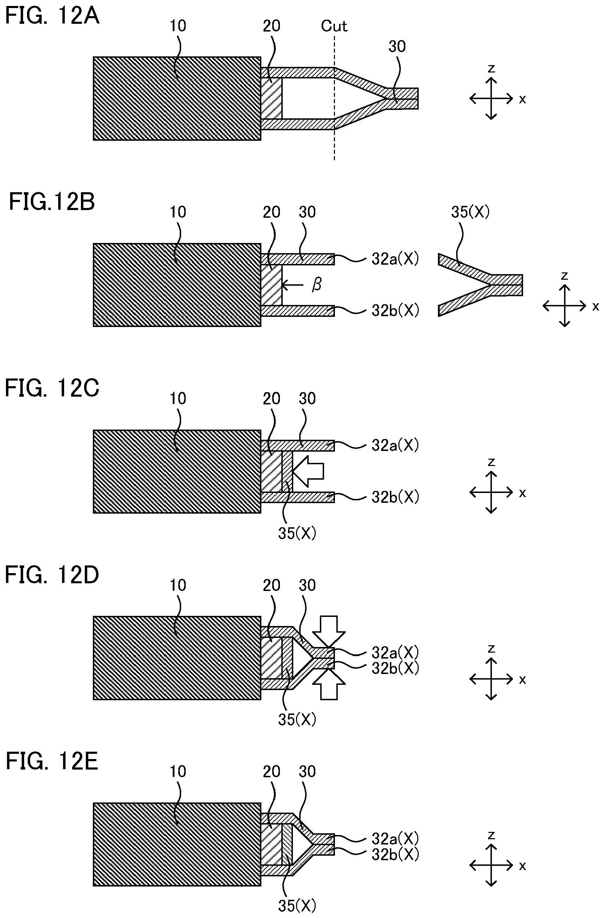

In the present disclosure, the (ii) and the (i) may be combined. For example, as shown in FIG. 12A, when the gas pack 30 is cut by a cutting jig (not illustrated), as shown in FIG. 12B, a part of the gas pack 30 remains in a state connected to the liquid injection frame 20. The remaining gas pack 30 is used as the sealing member X. Also, by the cutting, a part of the gas pack 30 is cut out from the liquid injection frame 20. The cut-out gas pack 35 is also used as the sealing member X. In specific, as shown in FIG. 12C, the gas pack 35 is welded onto the open surface β of the liquid injection frame 20. Next, as shown in FIG. 12D, the first extending part 32a and the second extending part 32b are welded so as to face to each other in the z axis direction. Thereby, as shown in FIG. 12E, the liquid injection frame 20 is sealed with the sealing member X.

Next, the case of (iii) will be explained. In this case, the liquid injection frame is sealed by using a member other than the gas pack as the sealing member X. Examples of the member other than the gas pack may include a film member. Details of the film member are in the same contents as those of the film member configuring the gas pack described above; thus the descriptions herein are omitted. Also, for the specific example of the case when the member other than the gas pack is used, the member other than the gas pack (such as a film member) may be used instead of "gas pack 35" described in FIGS. 11A to 11D and FIGS. 12A to 12E. In the present disclosure, the (iii) and the (i) may be combined. Also, in the present disclosure, the (i), the (ii) and the (iii) may be combined.

### 7. Battery

The battery in the present disclosure is preferably a secondary battery (such as a lithium ion secondary battery). Also, Examples of the applications of the battery may include a power source for vehicles such as hybrid electric vehicles (HEV), plug-in hybrid electric vehicles (PHEV), battery electric vehicles (BEV), gasolinefueled automobiles and diesel powered automobiles. In particular, it is preferably used as a power source for driving hybrid electric vehicles (HEV), plug-in hybrid electric vehicles (PHEV), and battery electric vehicles (BEV). Also, the battery in the present disclosure may be used as a power source for moving bodies other than vehicles (such as rail road transportation, vessel and airplane), and may be used as a power source for electronic products such as information processing equipment.

### B. Battery

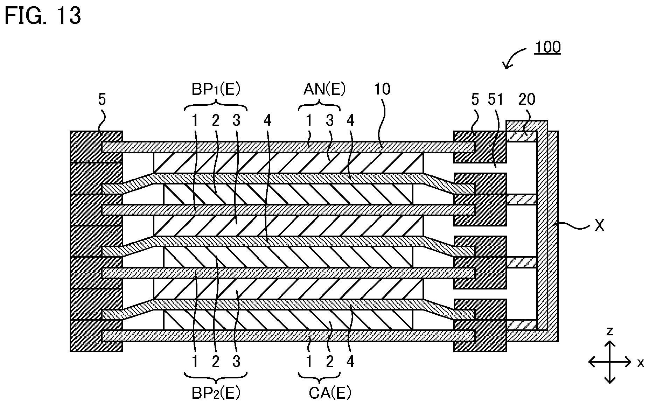

FIG. 13 is a schematic cross-sectional view exemplifying the battery in the present disclosure. Battery 100 illustrated in FIG. 13 includes electrode layered body 10 including a plurality of electrode E layered in the z axis direction, liquid injection frame 20 made of a resin arranged in a side surface of the electrode layered body 10, a liquid electrolyte (not illustrated) permeated to the electrode layered body 10, and sealing member X that seals the liquid injection frame 20. Also, as shown in FIG. 5C, when viewed from the x axis direction, gas pack part 31 is arranged to cover an entire outer periphery of the liquid injection frame 20, and the gas pack part 31 includes first surface 31a and second surface 31b facing to each other. In FIG. 5C, the sealing member includes first extending part 32a extending from the first surface 31a, and second extending part 32b extending from the second surface 31b. Also, when viewed from the x axis direction, layered part α, in which the first extending part 32a and the second extending part 32b are layered, is arranged.

According to the present disclosure, the specified layered part α is arranged, and thus the degrade in sealability due to deformation of the liquid injection frame is inhibited in the battery. The details of the battery in the present disclosure are in the same contents as those described in "A. Method for producing battery" above. For example, the sealing member may include third extending part 32c and fourth extending part 32d.

The present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Reference Sings List

- 1: current collector
- 2: cathode layer
- 3: anode layer
- 4: separator
- 5: sealing member
- 10: electrode layered body
- 20: liquid injection frame
- 30: gas pack
- 100: battery

## Claims

1. A method for producing a battery, the method **characterized by** comprising:
a preparing step of preparing an electrode member that includes an electrode layered body including a plurality of electrode layered in a z axis direction, and a liquid injection frame made of a resin arranged in a side surface of the electrode layered body;
a liquid injection step of injecting a liquid electrolyte into the electrode layered body in the electrode member via the liquid injection frame;
a temporary sealing step of temporary sealing the liquid injection frame by arranging a gas pack to cover an entire outer periphery of the liquid injection frame when viewed from an x axis direction orthogonal to the z axis direction, after the liquid injection step;
a gas storing step of storing a gas generated due to charging or aging in a space inside the gas pack after the temporary sealing step;
a degassing step of degassing the gas by opening the gas pack after the gas storing step; and
a sealing step of sealing the liquid injection frame with a sealing member after the degassing step.

2. The method for producing a battery according to claim 1, **characterized in that** the sealing member includes at least one of: (i) a part of the gas pack cut by a cutting jig and remained in a state connected to the liquid injection frame, (ii) a part of the gas pack cut by a cutting jig and cut out from the liquid injection frame, and (iii) a member other than the gas pack.

3. The method for producing a battery according to claim 2, **characterized in that** the sealing member includes the (i) .

4. The method for producing a battery according to claim 2, **characterized in that** the sealing member includes the (ii) .

5. The method for producing a battery according to claim 2, **characterized in that** the sealing member includes the (iii) .

6. The method for producing a battery according to claim 3 or 4, **characterized in that**
the gas pack includes a film member; and
in the sealing step, a layered part, in which a plurality of the film member is layered in the x axis direction, is formed.

7. The method for producing a battery according to claim 1, **characterized in that**
the gas pack includes a film member; and
the film member includes layers in the order of a first resin layer, a metal layer, and a second resin layer in a thickness direction.

8. The method for producing a battery according to claim 1, **characterized in that**
the liquid injection frame includes a resin; and
the gas pack is welded to cover an entire outer periphery of the liquid injection frame in the temporary sealing step.

9. The method for producing a battery according to claim 1, **characterized in that**
the liquid injection frame includes a resin; and
the sealing member is welded in an open surface of the liquid injection frame in the sealing step.

10. The method for producing a battery according to claim 1, **characterized in that**
a shape of the electrode layered body in a plan view is a square; and
a length of one side of the square is 30 cm or more.

11. The method for producing a battery according to claim 1, **characterized in that** the liquid injection frame includes a plurality of a liquid injection port in the z axis direction.

12. The method for producing a battery according to claim 1, **characterized in that** the liquid injection frame includes a plurality of a liquid injection port in a y axis direction orthogonal to the z axis direction and the x axis direction.

13. A battery **characterized by** comprising:
an electrode layered body including a plurality of electrode layered in a z axis direction;
a liquid injection frame made of a resin arranged in a side surface of the electrode layered body;
a liquid electrolyte permeated to the electrode layered body; and
a sealing member that seals the liquid injection frame; wherein
when viewed from an x axis direction orthogonal to the z axis direction, a gas pack part is arranged to cover an entire outer periphery of the liquid injection frame;
the gas pack part includes a first surface and a second surface facing to each other;
the sealing member includes a first extending part extending from the first surface, and a second extending part extending from the second surface; and
when viewed from the x axis direction, a layered part, in which the first extending part and the second extending part are layered, is arranged.

14. The battery according to claim 13, **characterized in that** a residue of the liquid electrolyte is present between the first extending part and the second extending part in the layered part.
